# EUROPÄISCHE PATENTANMELDUNG

(11) **EP 0 658 711 A1**
(43) Veröffentlichungstag der Anmeldung: **21.06.1995**
(21) Anmeldenummer: 94117967.3
(22) Anmeldetag: 15.11.1994
(51) Int. Cl.: F16H 61/38

(54) **Verfahren zum Regeln der Getriebeübersetzung eines stufenlosen Wechselgetriebes eines Kraftfahrzeuges**

(30) Priorität: 18.12.1993 DE 4343426
(71) Anmelder: MERCEDES-BENZ AG, D-70327 Stuttgart (DE)
(72) Erfinder: Desens, Jens, Dr.-Ing., D-73732 Esslingen (DE); Röhring, Thomas, Ing., D-70499 Stuttgart (DE)

(57) **Zusammenfassung**

Bei einem Verfahren zum Regeln der Getriebeübersetzung eines stufenlosen Wechselgetriebes eines Kraftfahrzeuges wird bei erstmaligem Auftreten eines definierten Schubbetriebszustandes ein an die in diesem Zeitpunkt vorliegende Fahrgeschwindigkeit angepaßter Sollwert der Getriebeübersetzung gesetzt und die Getriebeübersetzung nach Maßgabe der Sollwert-Istwert-Abweichung erhöht, sofern der definierte Schubbetriebszustand aufrechterhalten bleibt.

## Beschreibung

Die Erfindung bezieht sich auf ein Verfahren zum Regeln der Getriebeübersetzung eines stufenlosen Wechselgetriebes eines durch einen Antriebsmotor über das Wechselgetriebe antreibbaren und durch eine Betriebsbremse abbremsbaren Kraftfahrzeuges.

Bei einem bekannten Verfahren dieser Art (EP 0 306 229 A1) ist eine Einrichtung zum Bestimmen eines an eine signifikante Fahrgeschwindigkeit angepaßten Sollwertes Bestandteil eines an sich bekannten Tempomaten zur Regelung der Fahrgeschwindigkeit, bei dessen Inbetriebsetzung die aktuelle Fahrgeschwindigkeit als signifikante Fahrgeschwindigkeit festgesetzt und der Sollwert der Getriebeübersetzung entsprechend angepaßt wird. Bei diesem bekannten Verfahren kann im Tempomatbetrieb bei ausrollendem Fahrzeug durch Niederdrücken einer besonderen Taste ein sogenannter Schubbetriebszustand ausgelöst werden, bei dessen erstmaligem Auftreten die Drosselklappe des Antriebsmotores geschlossen und die Getriebeübersetzung durch Erhöhen des Sollwertes um einen vorzugsweise konstanten Wert erhöht wird, um das Fahrzeug abbremsen zu können, ohne daß hierfür eine Betätigung der Betriebsbremse mit dadurch bedingter Ausschaltung des Tempomaten erforderlich wäre.

Aus der DE 42 04 594 A1 ist ein Verfahren zur selbsttätigen Beaufschlagung eines Automatikgetriebes eines Kraftfahrzeuges in Abhängigkeit von bestimmten Fahrzuständen bekannt. Diesem Verfahren liegt folgende Problemstellung zugrunde. Will der Fahrer eines Kraftfahrzeuges mit einem herkömmlichen Automatikgetriebe bei Bergabfahrt die Bremswirkung des Motors nutzen, muß er manuell in das automatisierte Schaltgeschehen eingreifen und den Wählhebel in die Gangposition "3", "2" oder - bei extremen Gefällestrecken - in "1" bewegen. Unerfahrene Kraftfahrer machen bei Bergabfahrten möglicherweise nicht in der vorstehend beschriebenen Weise von der Bremswirkung des Motors Gebrauch, sondern versuchen, die Bremsleistung mit der Fußbremse aufzubringen. Dies kann zu ausgeglühten Bremsscheiben sowie zur Dampfblasenbildung in den Bremsleitungen und schließlich zu einem Totalausfall der Bremsanlage führen. Es wird daher bei diesem bekannten Verfahren angestrebt, für Bergabfahrten ein verbessertes Verfahren zur Beaufschlagung eines Automatikgetriebes bzw. eine Zusatz-Steuerung für ein Automatikgetriebe zu entwickeln. Zu diesem Zweck ist bei dem bekannten Verfahren vorgesehen, daß kontinuierlich fahrzeugspezifisch bekannte, zuvor bei Fahrt in der Ebene für jeweils einen geschalteten Gang ermittelte Daten über die Relation von Fahrgeschwindigkeit und Motordrehzahl einerseits und Fahrpedalstellung andererseits mit den in der augenblicklichen Fahrsituation für den entsprechenden geschalteten Gang ermittelten Daten aus diesen Parametern verglichen werden, und daß bei Bergabfahrten etwa ermittelte Datenabweichungen ab einer zuvor festgelegten Größenordnung zur Rückschaltung bzw. Verhinderung der Hochschaltung des Automatikgetriebes verwendet werden, wobei zusätzlich ein Signal des Bremslichtschalters bei dem Datenvergleich berücksichtigt wird.

Gegenstand der DE 41 12 577 A1 ist eine Steuerungsvorrichtung für ein automatisches Getriebe eines Fahrzeuges, welche den Betrieb eines automatischen Getriebes verbessern kann, wenn das Fahrzeug bergauf oder bergab fährt, wodurch die Sicherheit und der Komfort des Fahrzeuges vergrößert würden. Diese bekannte Steuerungsvorrichtung soll u.a. automatisch Motorbremsungen eines Fahrzeuges durchführen können, welches bergab fährt. Zu diesem Zweck umfaßt diese bekannte Steuerungsvorrichtung Berechnungseinrichtungen zum Berechnen des Fahrwiderstandes des Fahrzeuges, Auswahleinrichtungen zum Auswählen eines Ganges auf der Grundlage der Fahrzeuggeschwindigkeit und der Öffnung einer Drosselklappe des Fahrzeuges zu einer Zeit, wenn der Fahrwiderstand des Fahrzeuges größer ist als ein vorgeschriebener Wert entsprechend einem Gefälle, und Einstelleinrichtungen zum Einstellen des Getriebes in den gewählten Gang, wenn der Fahrwiderstand größer ist als der vorgeschriebene Wert und zum Herunterschalten des Getriebes von dem gewählten Gang in einen niedrigeren Gang, wenn der Fahrwiderstand kleiner ist als der vorgeschriebene Wert.

Aus der DE 40 37 248 A1 ist eine Fahrgeschwindigkeits-Regelvorrichtung für ein Kraftfahrzeug bekannt, das mit einem Antriebsmotor und einem durch eine elektronische Getriebesteuervorrichtung gesteuerten Getriebe versehen ist, mit einem elektronischen Fahrgeschwindigkeitsregler und einem auf den Antriebsmotor einwirkenden und in Abhängigkeit der Regelabweichung dessen Motormoment verändernden Stellglied. Damit die eingestellte Fahrgeschwindigkeit auch im Schiebebetrieb auf abwärtsgeneigten Straßen automatisch eingehalten wird, ohne daß der Fahrer eingreifen muß, sind bei dieser bekannten Regelvorrichtung weitere, bei vorgebbaren Randbedingungen auslösbare, auf die Fahrgeschwindigkeit durch Eingriff in die Steuerung des Getriebes einwirkende Steuermittel vorgesehen.

Auch die der vorliegenden Erfindung zugrunde liegende Aufgabe stellte sich durch folgende Problematik. Fahrzeuge mit Automatikgetriebe schalten üblicherweise in eine kleine Übersetzung (z.B. 5. Gang), wenn der Fahrer den Fuß vom Fahrpedal nimmt. Dies führt zu kleinen Motordrehzahlen und damit zu einem geringeren Benzinverbrauch. Bei Bergabfahrten ist die Bremswirkung des Motors aufgrund des geringen Motorschleppmomentes bei kleinen Motordrehzahlen aber so gering, daß das Fahrzeug immer schneller wird. Die gewünschte Geschwindigkeit muß dann durch Bremsen und/oder manuelles Zurückschalten gehalten werden. Wird die Geschwindigkeit bei längeren Bergabfahrten ohne Zurückschalten nur über die Bremse gehalten, so kann dies zur Überhitzung und schlimmstenfalls zum Ausfall der Bremsanlage führen.

Somit ist die der vorliegenden Erfindung zugrunde liegende Aufgabe im wesentlichen darin zu sehen, eine selbsttätige Geschwindigkeitsbegrenzung im Schubbetrieb zu erreichen.

Die erläuterte Aufgabe ist gemäß der Erfindung in vorteilhafter Weise durch ein Verfahren mit den Merkmalen des Patentanspruches gelöst.

Bei dem Verfahren nach der Erfindung ist die erläuterte Aufgabe in Verbindung mit einem stufenlosen Automatgetriebe gelöst, bei dem der Fahrer von der Aufgabe der Geschwindigkeitsregelung bei Bergabfahrten entlastet ist.

Das Verfahren nach der Erfindung ist Teil der Steuerung des stufenlosen Automatgetriebes und immer dann aktiv, wenn der Fahrer weder das Fahrpedal noch das Bremspedal betätigt. Es läuft folgendermaßen ab:
Das System erkennt z.B. am Bremslichtschalter, ob das Bremspedal betätigt wird und es erkennt z.B. am Drosselklappenpotentiometer, ob der Fahrer das Fahrpedal betätigt. Zu dem Zeitpunkt, in dem der Fahrer zum ersten Mal weder das Brems- noch das Fahrpedal betätigt, wird die momentane Fahrzeuggeschwindigkeit (die z.B. aus einem ABS-Drehzahlfühler ermittelt werden kann) als Wunschgeschwindigkeit gespeichert. Erhöht sich nun die Fahrzeuggeschwindigkeit infolge eines Gefälles, so wird das Motorschleppmoment so weit erhöht, bis sich wieder die Wunschgeschwindigkeit einstellt. Fällt die Fahrzeuggeschwindigkeit (z.B. nach Ende des Gefälles) wieder unter die Wunschgeschwindigkeit, so wird das Motorschleppmoment wieder auf den normalen, sich ohne das Verfahren nach der Erfindung einstellenden Wert verringert.

Die Erhöhung des Motorschleppmomentes geschieht über eine Erhöhung der Motordrehzahl, denn das Motorschleppmoment ist proportional zur Motordrehzahl. Diese kann über eine Vergrößerung der Getriebeübersetzung erhöht werden, denn die Motordrehzahl ist proportional zum Produkt aus der Fahrgeschwindigkeit und der Übersetzung.

Betätigt der Fahrer das Fahr- oder Bremspedal, so wird die Übersetzung wieder auf den Wert geregelt, der sich ohne das Verfahren nach der Erfindung eingestellt hätte.

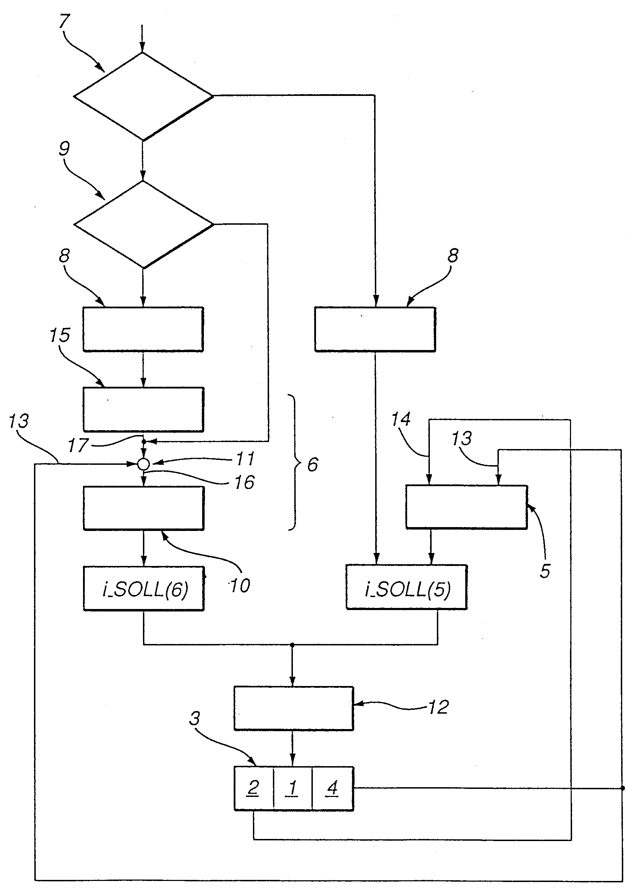

Einzelheiten der Erfindung ergeben sich aus der nachstehenden Beschreibung eines in der Zeichnung anhand eines Signalflußplanes schematisch dargestellten Ausführungsbeispieles.

Ein als Signalblock symbolhaft dargestelltes Kraftfahrzeug 3 ist durch einen Antriebsmotor 2 über ein stufenloses Wechselgetriebe 1, bspw. ein Umschlingungsgetriebe (Kettenwandler), antreibbar und durch eine Betrlebsbremse 4 abbremsbar. Die Getriebeübersetzung i des Wechselgetriebes 1 wird durch einen Übersetzungsregler 12 eingestellt, welcher entweder nach einer Sollwert-Vorgabe i_soll(5) einer elektronischen Getriebesteuereinheit 5 als eine erste Einrichtung zum Bestimmen eines Sollwertes oder nach einer Sollwert-Vorgabe i_soll(6) einer zweiten Einrichtung 6 zum Bestimmen des Sollwertes arbeitet. Die elektronische Getriebesteuerung 5 arbeitet in Abhängigkeit von Signalen fahrzeugspezifischer Zustandsgrößen, u. a. von einem Signal 13 bezüglich der aktuellen Fahrgeschwindigkeit v_aktuell und von einem Signal 14 bezüglich der Leistungsanforderung α_DK des Fahrers an den Antriebsmotor 2.

Die Entscheidung darüber, ob die erste Einrichtung 5 oder die zweite Einrichtung 6 auf den Übersetzungsregler 12 geschaltet ist, wird mittels einer dritten Einrichtung 7 getroffen, in welcher festgestellt wird, ob ein definierter Schubbetriebszustand vorliegt oder nicht. Dieser Schubbetriebszustand ist gegeben, wenn sowohl die Leistungsanforderung α_DK durch den Fahrer Null ist als auch die Betriebsbremse 4 nicht betätigt - also der Bremslichtschalter BLS nicht eingeschaltet ist. Für den Fall, daß der Schubbetriebszustand nicht vorliegt, wird ein Zustandsanzeiger 8 auf Null gesetzt und dadurch auch die erste Einrichtung 5 auf den Übersetzungsregler 12 geschaltet.

Für den Fall, daß durch die dritte Einrichtung 7 der definierte Schubbetriebszustand festgestellt wird, wird in einer Abfragestufe 9 als einer vierten Einrichtung darauf erkannt, ob der Zustandsanzeiger 8 auf Null gesetzt ist. Für den Fall, daß der Zustandsanzeiger 8 auf Null gesetzt war - was bedeutet, daß der definierte Schubbetriebszustand erstmals aufgetreten ist - werden der Zustandsanzeiger 8 auf 1 gesetzt und dadurch auch die zweite Einrichtung 6 anstelle der ersten Einrichtung 5 auf den Übersetzungsregler 12 geschaltet sowie eine Speicherstufe 15 angestoßen, um die beim Auftreten des definierten Schubbetriebszustandes vorliegende aktuelle Fahrgeschwindigkeit v_aktuell als Sollwert v_speich für die im Schubbetriebszustand nicht zu überschreitende Fahrgeschwindigkeit zu speichern. Eine fünfte Einrichtung 10 zur Erhöhung der Getriebeübersetzung i arbeitet so, daß anhand einer sechsten Einrichtung 11 die Abweichung (Signal 16) der aktuellen Fahrgeschwindigkeit V_aktuell (Signal 13) von dem gespeicherten Sollwert v_speich (Signal 17) ermittelt und der Übersetzungsregler 12 durch ein von der Abweichung abhängiges Sollwert-Signal i_soll (6) zur Erhöhung der Getriebeübersetzung beaufschlagt wird. Wenn im nächsten Abfolgetakt der Schubbetriebszustand noch aufrechterhalten ist, wird in der Abfragestufe 9 auf "Nein" erkannt und dadurch die Speicherstufe 15 übersprungen, um die Vergleicherstufe 11 mit dem Sollwert v_speich (Signal 17) des vorangegangenen Abfolgetaktes zu beaufschlagen.

Für den Fall, daß das Fahrpedal oder das Bremspedal betätigt werden, wird der Zustandsanzeiger 8 wieder auf Null gesetzt und die erste Einrichtung 5 anstelle der zweiten Einrichtung 6 auf den Übersetzungsregler 12 geschaltet.

## Patentansprüche

1. Verfahren zum Regeln der Getriebeübersetzung eines stufenlosen Wechselgetriebes (1) eines durch einen Antriebsmotor (2) über das Wechselgetriebe (1) antreibbaren und durch eine Betriebsbremse (4) abbremsbaren Kraftfahrzeuges (3),
· mit einer ersten Einrichtung (5) zum Bestimmen eines von der Leistungsanforderung (α_DK) durch den Fahrer an den Antriebsmotor und eines die momentane Fahrgeschwindigkeit (V_aktuell) des Kraftfahrzeuges (3) repräsentierenden Signals (13) abhängigen Sollwertes der Getriebeübersetzung,
· mit einer dritten Einrichtung (7) zum Bestimmen eines definierten Schubbetriebszustandes, der dann vorliegt, wenn die Leistungsanforderung (α_DK) gleich Null und die Betriebsbremse (4) nicht betätigt ist,
· mit einer vierten Einrichtung (9) zum Feststellen eins erstmaligen Auftretens des definierten Schubbetriebszustandes,
· mit einer zweiten Einrichtung (6), die als eine signifikante Fahrgeschwindigkeit (V_speich) diejenige momentane Fahrgeschwindigkeit (V_aktuell) festlegt, welche bei durch die vierte Einrichtung (9) festgestelltem erstmaligen Auftreten des definierten Schubzustandes vorliegt und daraus einen angepaßten Sollwert der Getriebeübersetzung bestimmt,
· mit einer sechsten Einrichtung (11) zur Ermittlung der Abweichung der momentanen Fahrgeschwindigkeit (V_aktuell) von der signifikanten Fahrgeschwindigkeit (V_speich),
· mit einer fünften Einrichtung (10) zur Erhöhung der Getriebeübersetzung in Abhängigkeit der durch die sechste Einrichtung (11) ermittelten Abweichung,
wobei in einem in der zeitlichen Abfolge ersten Verfahrensschritt eine Entscheidung darüber getroffen wird, ob die erste Einrichtung (5) oder bei Vorliegen des durch die dritte Einrichtung (7) bestimmten Schubbetriebszustandes die zweite Einrichtung (6) zum Bestimmen des Sollwertes der Getriebeübersetzung verwendet wird, wobei in einem zeitlich gleichrangigen oder unmittelbar anschließenden zweiten Verfahrensschritt bei Verwendung der zweiten Einrichtung (6) der Sollwert der Getriebeübersetzung in Abhängigkeit der signifikanten Fahrgeschwindigkeit (V_speich) angepaßt wird,
und wobei ein durch den zweiten Verfahrensschrift auslösbarer und sich an diesen anschließender dritter Verfahrensschritt vorgesehen ist, in welchem unter Verwendung der fünften und sechsten Einrichtung (10 und 11) die Getriebeübersetzung erhöht wird, sofern der durch die dritte Einrichtung festgestellte definierte Schubbetriebszustand aufrechterhalten bleibt.
